# EUROPEAN PATENT SPECIFICATION

(11) **EP 2 941 954 B1**
(45) Date of publication and mention of the grant of the patent: **15.02.2017**
(21) Application number: 15166528.8
(22) Date of filing: 06.05.2015
(51) Int. Cl.: A01K 1/01, A01K 1/015

(54) **STABLE FLOOR SYSTEM**
STALLBODENANLAGE
SYSTÈME DE SOL D'ÉTABLE

(30) Priority: 07.05.2014 NL 2012773
(43) Date of publication of application: 11.11.2015
(73) Proprietor: Romaries Beheer B.V., 1617 KK Westwoud (NL)
(72) Inventor: Groensma, Ype, 1617 KK Westwoud (NL)
(74) Representative: Hooiveld, Arjen Jan Winfried

(56) References cited:
- EP-A1- 1 719 404
- WO-A1-97/25857
- WO-A1-98/16099
- DE-C1- 19 519 088

## Description

The invention relates to a stable floor system comprising a stable floor, wherein the stable floor comprises a walking surface and at least one groove extending over the walking surface, and also comprising a device for removing manure from the floor, i.e. from the groove.

Such a stable floor system is known from Dutch patent publication No. 1 003 271 (IMAG-DLO). The stable floor of said known stable floor system consists of elongate floor elements provided with a walking surface exhibiting a profile in the form of slots extending parallel to each other. Said slots function on the one hand to increase the grip of animals walking on the floor and on the other hand to drain urine from the animals. The slots of adjacent floor elements are in line. The floor elements are supported on upright side walls of a manure cellar with their short sides and are placed some distance apart along their long sides, forming between them a groove that extends transversely to the slots. This makes it possible to push manure present in the slots in the direction of the transverse groove, using a so-called manure scraper, so that the manure can subsequently be deposited in the manure cellar via the transverse groove. The removal of manure from the slots therefore takes place by conveying the manure to the transverse groove, which functions as a discharge channel.

Documents EP-A-1719404 and WO-A-97/25857 disclose similar stable floor systems.

A drawback of the stable floor system that is known from the aforesaid Dutch patent document is that solid manure as well as liquid manure or urine can find its way into the manure cellar under the stable floor.

It is the object of the invention to obviate the drawbacks of the prior art, i.e. to provide a stable floor system comprising a low-maintenance, sturdy floor which is easy to clean and to install, wherein solid manure and liquid manure are collected separately from each other.

In order to achieve that object, a stable floor system of the kind described in the introduction is according to the invention as defined in claim 1 characterised in that recessed parts of the groove are provided with at least one opening that opens into a tube installed under the walking surface for discharging solid and liquid manure present in the recessed parts into the tube via the opening by means of the device, wherein a wall of the tube is provided with holes for discharging liquid manure present in the tube via said holes. In other words, the solid manure is conveyed to the tube, for example by means of a manure scraper, whilst the liquid manure is discharged from the tube. Although the tube may be made of any conceivable material, the tube is preferably made of plastic material. The stable floor is in particular located above a cellar, with the holes opening into a cellar provided under the tube for discharging liquid manure present in the tube into the cellar via the holes. The holes open into a second tube installed under the tube for discharging liquid manure present in the first tube into the second tube via the holes. A wall of the second tube may be provided with holes, if desired, which holes open into an underlying cellar for discharging liquid manure present in the second tube into the cellar via said holes.

The invention relates to the separate discharge of solid manure via the first tube and liquid manure via the second tube, wherein the holes in the wall of the first tube are configured so as regards their dimensions that solid manure cannot fall therethrough. The stable floor preferably comprises one groove for each aisle for the animals.

It is noted that within the scope of the invention the stable floor is a fixed floor or a floor consisting of several individual floor elements.

Within the scope of the invention, the term "tube" is furthermore understood to mean an elongate cylindrical element having a random, i.e. circular or angular cross-section.

In a preferred embodiment of a stable floor system according to the invention, the first tube and the second tube are made of plastic material. The first tube and the second tube are in particular made in one piece. More in particular, the first tube and the second tube form an extruded section.

In another preferred embodiment of a stable floor system according to the invention, the first tube and the second tube are embedded in the stable floor. The stable floor is preferably made of concrete in that case.

In another preferred embodiment of a stable floor system according to the invention, the second tube is connected to a pump for pumping the liquid manure from the second tube. Preferably, the respective ends of the first tube and the second tube open into separate containers for the solid manure and the liquid manure near an edge of the stable floor.

In another preferred embodiment of a stable floor system according to the invention, the stable floor system is provided with a conveying device which is movable within the tube/tubes for conveying the manure from the tube/tubes. The conveying device in particular comprises a conveyor screw or (a) piston (s) . In another preferred variant, the conveying device is provided with an elongate element which is movable within the first tube and the second tube, on which element discs are provided at regular intervals, wherein a diameter of the discs preferably corresponds to a diameter of the tube/tubes. The discs may also have a diameter different from that of the tube, if desired. The elongate element is in particular made up of a rod or a cable or cord that is kept tensioned.

The invention will now be explained in more detail with reference to figures illustrated in a drawing, in which
- Figures 1 and 2 show a schematic perspective view and a schematic top plan view, respectively, of a preferred variant of a stable floor system according to the invention; and

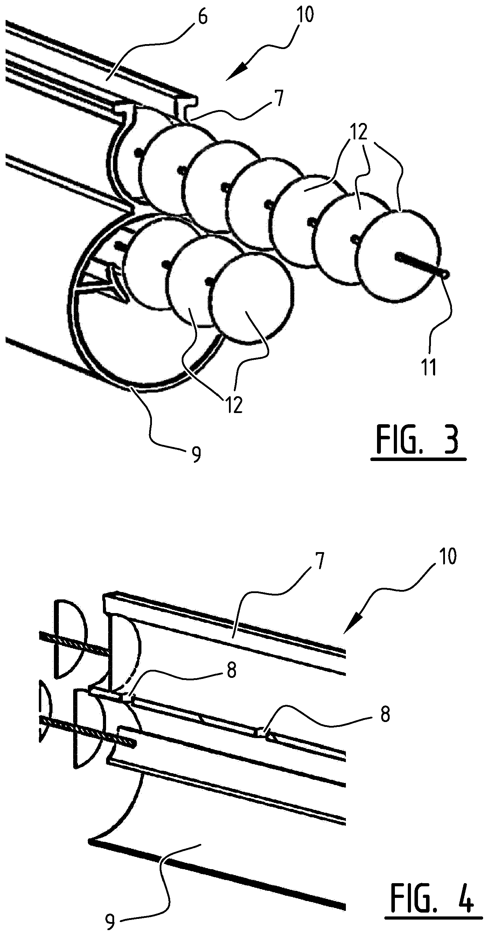

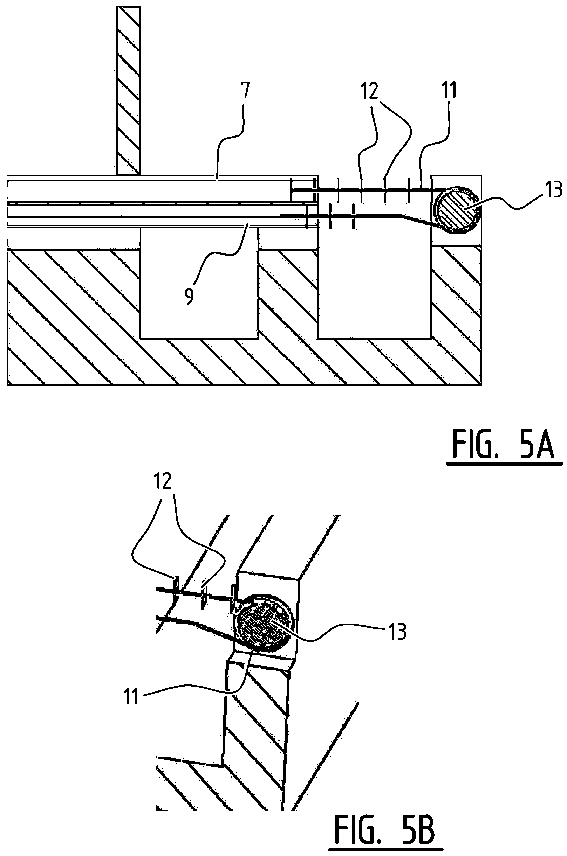

- Figures 3-5 show various schematic views of details of the stable floor system of figures 1 and 2.

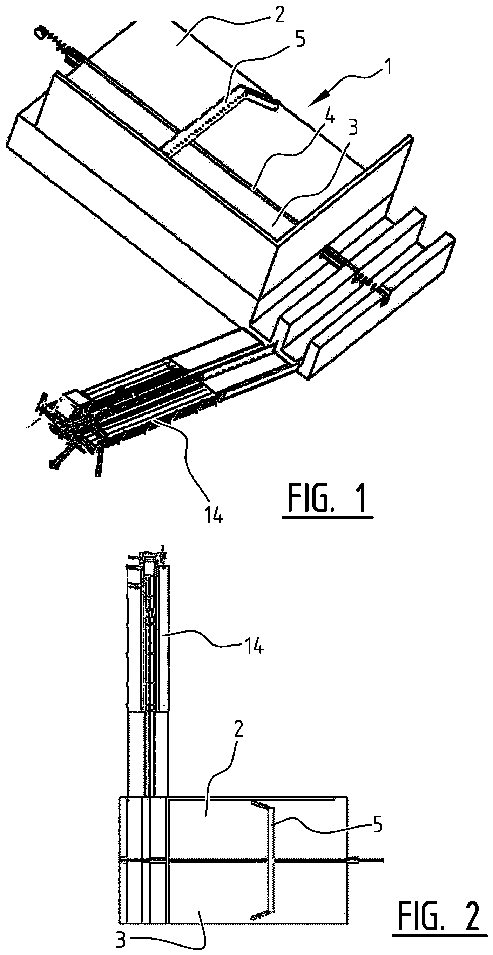

In figures 1 and 2 there is shown a stable floor 1 according to the invention which consists of two plate-shaped floor elements 2, 3 of reinforced concrete. In order to realise a good grip for animals that walk on the stable floor, the surface of the stable floor 1 is provided with a slot or groove 4 between the floor elements 2, 3, so that a manure scraper 5 provided with projections that extend into the groove 4 can cover the entire stable floor 1. The groove 4 has several holes 6 provided in the bottom thereof, which holes open into a first tube 7. Solid and liquid manure present in the groove 4 can find its way into the first tube 7 via the holes 6 as a result of the forward and backward movement of the manure scraper 5.

As shown, a wall of the first tube 7 comprises holes 8 that open into a second tube 9 installed under the first tube 7 for discharging liquid manure (also referred to as "urine") present in the first tube 7 into the second tube 9 via the holes 8. The first and second
tube 7, 9 form a section 10 extruded from plastic material, which is embedded in the stable floor 1.

In the first tube 7 and the second tube 9 an endless cord 11 which is kept at tension is mounted, which cord is provided with discs 12 at regular intervals. The diameter of the discs 12 corresponds to the diameter of the tube 7, 9. By moving the cord 11 with the discs 12 through the tubes 7, 9, solid manure is conveyed to an end of the first tube 7 and liquid manure is conveyed to an end of the second tube 9. The cord 11 is driven by being passed over a driven pulley 13. A conveyor 14 functions to carry off the solid manure for further processing. The liquid manure will be collected in a basin. Said basin may be located directly behind the end of the tube. The liquid manure may also be pumped to another location.

The invention is not limited to the embodiment shown herein, but it also extends to other preferred variants that fall within the scope of the appended claims. Thus it will be quite obvious to a person skilled in the art that only one tube (7) may be provided, a wall of which is provided with holes for discharging liquid manure to an underlying manure cellar for the purpose of separating the manure into solid manure present in the tube (7) and liquid manure present in the manure cellar.

## Claims

1. A stable floor system comprising a stable floor (1), wherein the stable floor (1) comprises a walking surface and at least one groove (4) extending over the walking surface, and also comprising a device (5) for removing manure from the floor (1), wherein recessed parts of the groove (4) are provided with at least one opening (6) that opens into a first tube (7) installed under the walking surface for discharging solid and liquid manure present in the recessed parts into the tube (7) via the opening (6) by means of the device (5), **characterized in that** a wall of the first tube (7) is provided with holes (8) for discharging liquid manure present in the first tube (7) via said holes (8) into a second tube (9) installed under the first tube (7) for discharging liquid manure present in the first tube (7) into the second tube (9) via the holes (8)in order to separately discharging solid manure via the first tube (7) and liquid manure via the second tube (9), wherein the holes (8) of the first tube (7) are configured so as regard their dimensions that solid manure cannot fall therethrough.

2. A stable floor system according to claim 1, wherein the stable floor (1) is located above a cellar, and wherein a wall of the second tube (9) is provided with holes which open into the cellar for discharging liquid manure present in the second tube (9) into the cellar via said holes.

3. A stable floor system according to claim 1 or 2, wherein the first tube (7) and the second tube (9) are made of plastic material.

4. A stable floor system according to claim 1, 2 or 3, wherein the first tube (7) and the second tube (9) are made in one piece.

5. A stable floor system according to any one of the preceding claims 1 - 4, wherein the first tube (7) and the second tube (9) form an extruded section.

6. A stable floor system according to any one of the preceding claims 1 - 5, wherein the first tube (7) and the second tube (9) are embedded in the stable floor (1).

7. A stable floor system according to any one of the preceding claims 1 - 6, wherein the second tube (9) is connected to a pump for pumping the liquid manure from the second tube (9).

8. A stable floor system according to any one of the preceding claims 1 - 7, wherein the respective ends of the first tube (7) and the second tube (9) open into separate containers for the solid manure and the liquid manure near an edge of the stable floor (1).

9. A stable floor system according to any one of the preceding claims 1 - 8, wherein the stable floor system is provided with a conveying device which is movable within the tube/tubes (7, 9) for conveying the manure from the tube/tubes (7, 9).

10. A stable floor system according to claim 9, wherein the conveying device comprises a conveyor screw or (a) piston(s).

11. A stable floor system according to claim 9, wherein the conveying device is provided with an elongate element (11) which is movable within the first tube (7) and the second tube (9), on which element discs (12) are provided at regular intervals

12. A stable floor system according to any one of the preceding claims 1 - 11, wherein the stable floor (1) is a fixed floor.

13. A stable floor system according to any one of the preceding claims 1 - 11, wherein the stable floor (1) comprises several individual floor elements.

## Patentansprüche

1. Stallbodenanlage, umfassend einen Stallboden (1),
wobei der Stallboden (1) eine Lauffläche und zumindest eine Rinne (4) umfasst, die sich über die Lauffläche erstreckt, sowie außerdem eine Vorrichtung (5) zum Entfernen von Dung von dem Boden (1),
wobei ausgesparte Teile der Rinne (4) mit zumindest einer Öffnung (6), die zu einem unter der Lauffläche installierten ersten Rohr (7) offen ist, zum Abführen von in den ausgesparten Teilen vorhandenem festen und flüssigen Dung bzw. Gülle durch die Öffnung (6) mittels der Vorrichtung (5) in das Rohr (7) versehen sind,
**dadurch gekennzeichnet, dass** eine Wand des ersten Rohres (7) mit Löchern (8) zum Abführen von in dem ersten Rohr (7) vorhandenem flüssigen Dung durch die Löcher (8) in ein unter dem ersten Rohr (7) installiertes zweites Rohr (9) versehen ist, um in dem ersten Rohr (7) vorhandenen flüssigen Dung in das zweite Rohr (9) durch die Löcher (8) abzuführen, um festen Dung durch das erste Rohr (7) und flüssigen Dung durch das zweite Rohr (9) getrennt abzuführen,
wobei die Löcher (8) des ersten Rohres (7) in Bezug auf ihre Abmessungen so gestaltet sind, dass fester Dung durch diese nicht fallen kann.

2. Stallbodenanlage nach Anspruch 1, wobei der Stallboden (1) sich über einem Keller befindet
und wobei eine Wand des zweiten Rohres (9) mit zu dem Keller hin offenen Löchern zum Abführen von in dem zweiten Rohr (9) vorhandenem flüssigen Dung durch die betreffenden Löcher in den Keller versehen ist.

3. Stallbodenanlage nach Anspruch 1 oder 2, wobei das erste Rohr (7) und das zweite Rohr (9) aus Kunststoff hergestellt sind.

4. Stallbodenanlage nach Anspruch 1, 2 oder 3, wobei das erste Rohr (7) und das zweite Rohr (9) einstückig hergestellt sind.

5. Stallbodenanlage nach einem der vorhergehenden Ansprüche 1 bis 4, wobei das erste Rohr (7) und das zweite Rohr (9) einen extrudierten Abschnitt bilden.

6. Stallbodenanlage nach einem der vorhergehenden Ansprüche 1 bis 5, wobei das erste Rohr (7) und das zweite Rohr (9) in dem Stallboden (1) eingebettet sind.

7. Stallbodenanlage nach einem der vorhergehenden Ansprüche 1 bis 6, wobei das zweite Rohr (9) mit einer Pumpe zum Pumpen des flüssigen Dungs aus dem zweiten Rohr (9) verbunden ist.

8. Stallbodenanlage nach einem der vorhergehenden Ansprüche 1 bis 7, wobei die jeweiligen Enden des ersten Rohres (7) und des zweiten Rohres (9) zu gesonderten Behältern für den festen Dung und den flüssigen Dung nahe eines Randes des Stallbodens (1) offen sind.

9. Stallbodenanlage nach einem der vorhergehenden Ansprüche 1 bis 8, wobei die Stallbodenanlage mit einer Fördervorrichtung versehen ist, die innerhalb des Rohres/der Rohre (7, 9) zum Fördern des Dungs von dem Rohr/den Rohren (7, 9) bewegbar ist.

10. Stallbodenanlage nach Anspruch 9, wobei die Fördervorrichtung eine Förderschnecke oder einen Kolben bzw. Kolben umfasst.

11. Stallbodenanlage nach Anspruch 9, wobei die Fördervorrichtung mit einem innerhalb des ersten Rohres (7) und des zweiten Rohres (9) bewegbaren länglichen Element (11) versehen ist, an dem Elementscheiben (12) in regelmäßigen Intervallen vorgesehen sind.

12. Stallbodenanlage nach einem der vorhergehenden Ansprüche 1 bis 11, wobei der Stallboden (1) ein ortsfester Boden ist.

13. Stallbodenanlage nach einem der vorhergehenden Ansprüche 1 bis 11, wobei der Stallboden (1) mehrere einzelne Bodenelemente umfasst.

## Revendications

1. Système de sol d'étable comprenant un sol d'étable (1), dans lequel le sol d'étable (1) comprend une surface de passage et au moins une rainure (4) s'étendant au-dessus de la surface de passage, et comprenant aussi un dispositif (5) destiné à extraire du fumier du sol (1), dans lequel des parties concaves de la rainure (4) comportent au moins une ouverture (6) qui débouche dans un premier tube (7) installé au-dessous de la surface de passage afin de décharger du fumier solide et liquide présent dans les parties concaves, dans le tube (7) par l'intermédiaire de l'ouverture (6) au moyen du dispositif (5),
**caractérisé en ce que**
une paroi du premier tube (7) comporte des orifices (8) destinés à décharger du fumier liquide présent dans le premier tube (7) par l'intermédiaire desdits orifices (8) dans un second tube (9) installé au-dessous du premier tube (7) afin de décharger le fumier liquide présent dans le premier tube (7) dans le second tube (9) par l'intermédiaire des orifices (8) dans le but de décharger séparément le fumier solide par l'intermédiaire du premier tube (7) et le fumier liquide par l'intermédiaire du second tube (9), dans lequel les orifices (8) du premier tube (7) sont configurés, en qui ce concerne leurs dimensions, de manière à ce que le fumier solide ne puisse pas passer à travers.

2. Système de sol d'étable selon la revendication 1, dans lequel le sol d'étable (1) est situé au-dessus d'une cave, et dans lequel une paroi du second tube (9) comporte des orifices qui débouchent dans la cave de manière à évacuer le fumier liquide, présent dans le second tube (9), dans la cave par l'intermédiaire desdits orifices.

3. Système de sol d'étable selon la revendication 1 ou 2, dans lequel le premier tube (7) et le second tube (9) sont réalisés en une matière plastique.

4. Système de sol d'étable selon la revendication 1, 2 ou 3, dans lequel le premier tube (7) et le second tube (9) sont réalisés en une seule pièce.

5. Système de sol d'étable selon l'une quelconque des revendications 1 à 4 précédentes, dans lequel le premier tube (7) et le second tube (9) forment une section extrudée.

6. Système de sol d'étable selon l'une quelconque des revendications 1 à 5 précédentes, dans lequel le premier tube (7) et le second tube (9) sont noyés dans le sol d'étable (1).

7. Système de sol d'étable selon l'une quelconque des revendications 1 à 6 précédentes, dans lequel le second tube (9) est raccordé à une pompe destinée à pomper le fumier liquide du second tube (9).

8. Système de sol d'étable selon l'une quelconque des revendications 1 à 7 précédentes, dans lequel les extrémités respectives du premier tube (7) et du second tube (9) débouchent dans des conteneurs séparés pour le fumier solide et le fumier liquide, à proximité d'un bord du sol d'étable (1).

9. Système de sol d'étable selon l'une quelconque des revendications 1 à 8 précédentes, dans lequel le système de sol d'étable comporte un dispositif de transfert qui peut être déplacé à l'intérieur du ou des tubes (7, 9) afin de transférer le fumier depuis le ou les tubes (7, 9).

10. Système de sol d'étable selon la revendication 9, dans lequel le dispositif de transfert comprend une vis de convoyeur ou un ou plusieurs pistons.

11. Système de sol d'étable selon la revendication 9, dans lequel le dispositif de transfert comporte un élément allongé (11) qui peut être déplacé à l'intérieur du premier tube (7) et du second tube (9), sur lequel des disques élémentaires (12) sont agencés à intervalles réguliers.

12. Système de sol d'étable selon l'une quelconque des revendications 1 à 11 précédentes, dans lequel le sol d'étable (1) est un sol fixe.

13. Système de sol d'étable selon l'une quelconque des revendications 1 à 11 précédentes, dans lequel le sol d'étable (1) comprend plusieurs éléments de sol individuels.
